# EUROPÄISCHE PATENTSCHRIFT

(11) **EP 0 554 883 B1**
(45) Veröffentlichungstag und Bekanntmachung des Hinweises auf die Patenterteilung: **08.05.1996**
(21) Anmeldenummer: 93101798.2
(22) Anmeldetag: 05.02.1993
(51) Int. Cl.: H02M 3/335

(54) **Treiberschaltung für einen Leistungstransistor**
Power transistor drive circuit
Circuit de commande pour transistor de puissance

(30) Priorität: 07.02.1992 DE 4203538
(43) Veröffentlichungstag der Anmeldung: 11.08.1993
(73) Patentinhaber: Deutsche Thomson-Brandt GmbH, D-78003 Villingen-Schwenningen (DE)
(72) Erfinder: Lopez, Daniel, W-7744 Königsfeld 6 (DE)

(56) Entgegenhaltungen:
- EP-A- 0 043 761
- DD-A- 280 642
- DE-A- 3 134 599

## Beschreibung

Die vorliegende Erfindung geht aus von einer Schaltungsanordnung zur Ansteuerung eines Schalttransistors, der in Serie zu einer Primärwicklung eines Transformators liegt, an dessen Sekundärwicklungen stabilisierte Spannungen abnehmbar sind. Eine derartige Schaltungsanordnung wird unter anderem verwendet bei Schaltnetzteilen, bei Hochspannungsgeneratoren oder bei Zeilenablenkschaltungen in Fernsehgeräten.

Eine Schaltungsanordnung gemäß dem Oberbegriff des Anspruchs 1 ist aus der DD 280 642 A1 bekannt. Aus der EP-A-0 043 761 ist eine weitere Schaltungsanordnung bekannt, bei der eine Primärwicklung eines zweiten Stromtransformators in Serie zu einer Primärwicklung eines ersten Stromtransformators geschaltet ist.

Mit Einführung einer erhöhten Zeilenzahl (High-Scan) sowie eines größeren Bildformates (Wide-Screen) werden auch höhere Anforderungen an die Belastbarkeit und an die Verminderung von Verlusten bei Schaltungsanordnungen der eingangs genannten Art gestellt.

Der Erfindung liegt deshalb die Aufgabe zugrunde, eine gemäß Oberbegriff des Patentanspruchs beschriebene Schaltungsanordnung derart aufzubauen, daß diese trotz der erhöhten Anforderungen mit weniger Aufwand aufgebaut werden kann. Diese Aufgabe wird durch die im Patentanspruch gekennzeichneten Maßnahmen gelöst.

Nachstehend wird die Erfindung mit Hilfe der Zeichnung an drei Ausführungsbeispielen beschrieben.
- Figur 1: zeigt ein erstes Ausführungsbeispiel mit einem Schaltnetzteil;
- Figur 2: zeigt ein zweites Ausführungsbeispiel mit einer Horizontalablenkschaltung;
- Figur 3: zeigt ein drittes Ausführungsbeispiel mit einem Hochspannungsgenerator;
- Figur 4: zeigt Signale an den in Figur 1 gekennzeichneten Stellen.

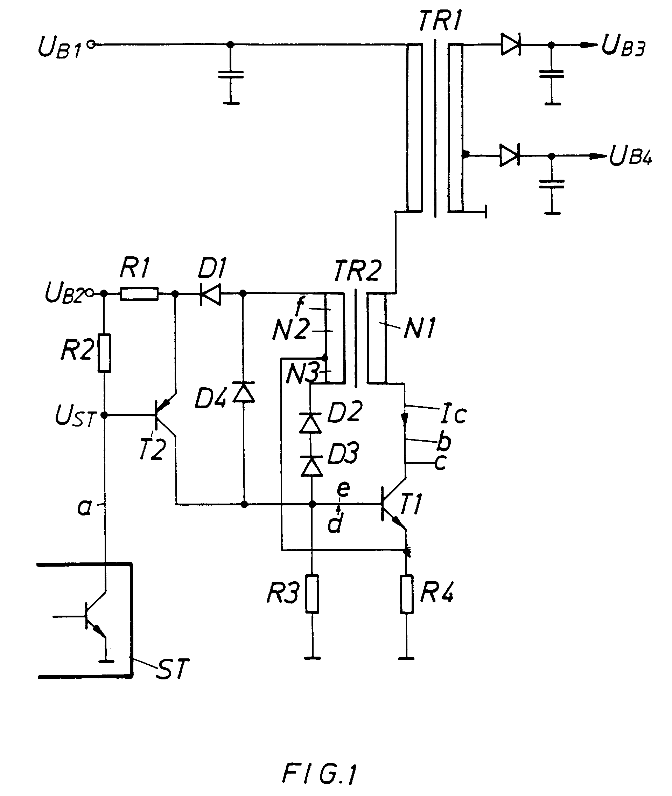

In Figur 1 ist ein Schaltnetzteil dargestellt, welches in bekannter Weise aus einer gleichgerichteten Spannung UB1 mehrere geregelte Betriebsspannungen UB3, UB4 erzeugt. Dazu wird ein mit der Primärwicklung des Schaltnetzteiltransformators TR1 in Serie liegender elektronischer Schalter T1 periodisch durchgeschaltet, der das eine Ende der Primärwicklung des Transformators TR1 auf Massepotential schaltet, dessen anderen Ende mit der ungeregelten Gleichspannung UB1 verbunden ist. Das Tastverhältnis der Ansteuerimpulse für den elektronischen Schalter T1 aus einer Steuerschaltung ST wird mit Hilfe einer nicht näher bezeichneten Regelschaltung derart verändert, daß die erzeugten sekundärseitigen Ausgangsgleichspannungen UB3, UB4 konstant gehalten werden.

In Serie zur Primärwicklung des Transformators TR1 ist ein weiterer Stromtransformator TR2 geschaltet, dessen Primärwicklung N1 im Kollektorkreis des elektronischen Schalters T1 liegt. Die Sekundärseite des Stromtransformators TR2 besteht aus einer angezapften Sekundärwicklung N2, N3. Das obere Ende der Wicklung N2 ist über eine Diode D1 mit dem Emitter eines Transistors T2 verbunden, der über einen Widerstand R1 an einer positiven Spannung UB2 liegt. Die Basis des Transistors T2 liegt einerseits über dem Widerstand R2 an der positiven Betriebsspannung UB2 und andererseits an dem Ausgang der Steuerschaltung ST. Der Kollektor des Transistors T2 ist mit der Basis des elektronischen Schalters T1 verbunden. Der Transistor T2 braucht lediglich den geringen Basisstrom für den elektronischen Schalter T1 zu liefern und kann deshalb klein sein. Die Anzapfung der Sekundärwicklung des Stromtransformators TR2 ist mit dem Emitter des elektronischen Schalters T1 verbunden. Das untere Ende der Sekundärwicklung N2 des Stromtransformator TR2 ist über die Dioden D2 und D3 mit der Basis des elektronischen Schalters T1 verbunden, die über den Widerstand R3 auf das Bezugspotential geschaltet ist. Schließlich ist die Basis des elektronischen Schalters T1 über eine Diode D4 mit dem oberen Ende der Sekundärwicklung des Stromtransformators TR2 verbunden.

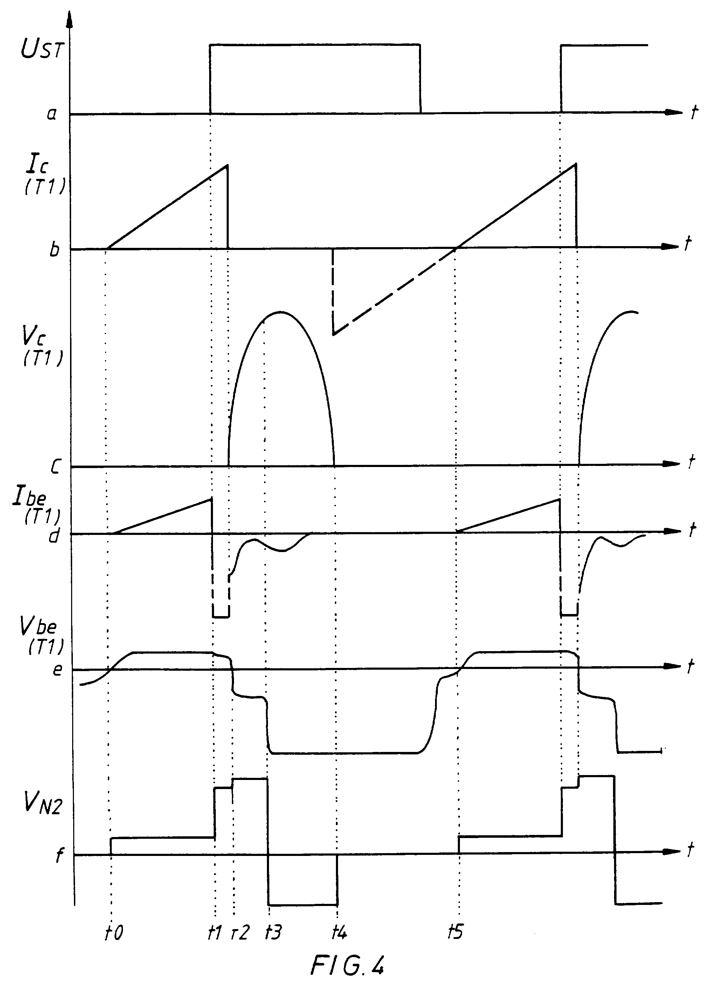

Nachfolgend wir die Wirkungsweise der soeben beschriebenen Schaltung (Figur 1) mit Hilfe der Figur 4 beschrieben.
(1) Zum Zeitpunkt t0 wird durch die Steuerschaltung ST der PNP-Transistor T2 eingeschaltet, so daß ein Basisstrom IB in den elektronischen Schalter T1 fließt (Figur 4d), der einen entsprechenden Kollektorstrom IC des elektronischen Schalters T1 zur Folge hat (Figur 4b), der auch durch die Primärwicklung N1 des Transformators TR2 fließt. Die Spannung an der Wicklung N2 beträgt ungefähr 1,5 Volt, die sich aus der Spannung UD an der Diode D1, der Kollektoremitterspannung VCE des Transistors T2 und der Basisemitterspannung VBE des elektronischen Schalters T1 zusammensetzt. Die Windungszahl der Wicklung N3 beträgt etwa ein Viertel der Windungszahl der Wicklung N2, so daß an N3 ungefähr 0,4 Volt entstehen und die Dioden D2 und D3 gesperrt bleiben. Ein unerwünschter Strom durch diese Dioden infolge erhöhter Basisemitterspannung des Transistors T1 erhöht ihren Spannungsabfall,so daß sich der Strom begrenzt. Andernfalls müßte noch eine weitere Diode in Serie geschaltet werden.
(2) Zum Zeitpunkt t1 schaltet die Steuerschaltung ST den Transistor T2 ab (Figur 4a), so daß der positive Basisstrom des Transistors T1 unterbrochen wird (Figur 4d). Da der Kollektorstrom des Transistors T1 wegen der noch aufgeladenen Transistorkapazitäten bis zum Zeitpunkt t2 weiterfließt (Figur 4b), bis sich diese Kapazitäten entladen haben und so einen negativen Basisstrom erzeugen, der über die Dioden D2 und D3 fließt in die Wicklung N3 des Transformators TR2, die ab dem Zeitpunkt t2 aktiv ist und einen Strom erzeugt, der dem Übersetzungsverhältnis N2/N3 von ca. 4 : 1 entspricht. Auf diese Weise wird der Transistor T1 über seinen eigenen Kollektorstrom abgeschaltet, der, solange er noch fließt, die hohe negative Spannung erzeugt.
(3) Wenn der Transistor T1 abgeschaltet ist, steigt die Kollektorspannung über seinen VCEO-Wert an. Deshalb muß an seiner Basis eine negative Spannung stehen. Dieses wird durch die im Transformator TR2 während der Zeit to bis t3 gespeicherte magnetische Energie erreicht. Diese Energie erzeugt eine negative Spannung an der Wicklung N2, die über die Diode D4 an die Basis des Transistors T1 gelangt (Figur 4d). Diese Spannung ist durch die Reversspannung VBE von T1 begrenzt.

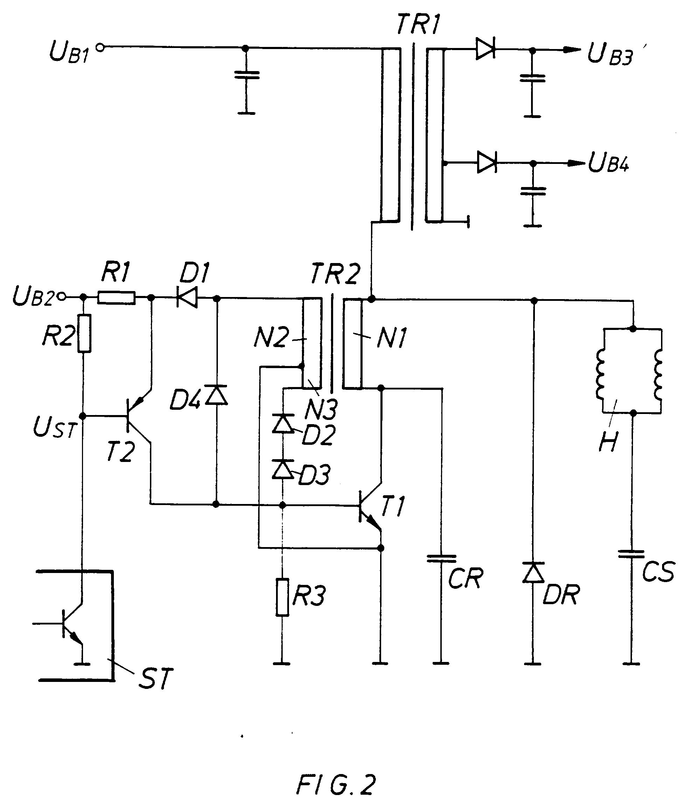

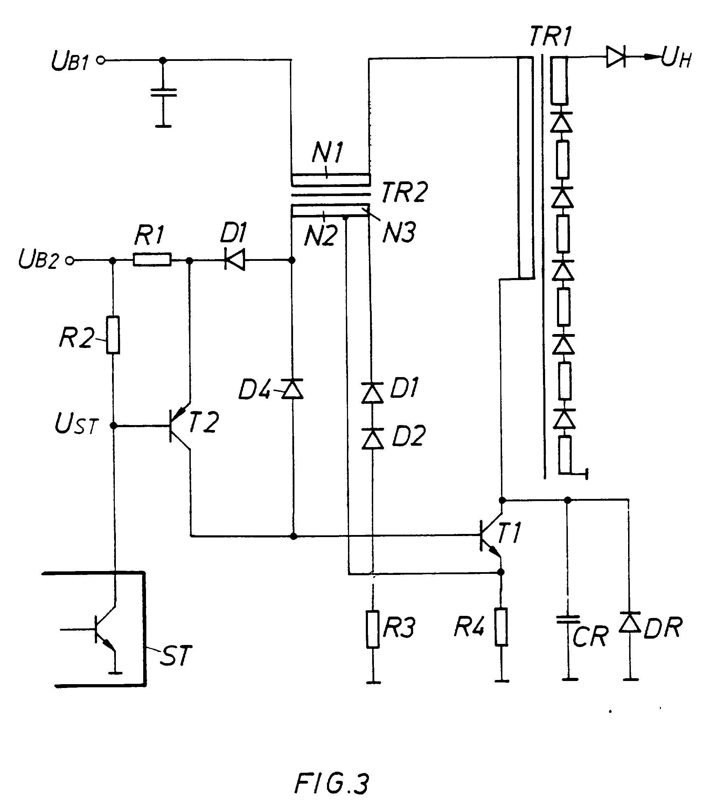

Während in Figur 1 die Erfindung in Anwendung auf ein Schaltnetzteil beschrieben wurde, ist in Figur 2 die Anwendung auf eine Horizontalablenkschaltung und in Figur 3 die Anwendung auf einen Hochspannungsgenerator eines Bildwiedergabegerätes, wie z.B. eines Fernsehempfangsgerätes oder eines Monitors gezeigt. Die Bauteile, die denjenigen der Figur 1 entsprechen, sind mit gleichartigen Bezugszeichen versehen. Die Funktion entspricht der Wirkungsweise, die anhand des Ausführungsbeispiels gemäß Figur 1 beschrieben wurde.

Wenn, wie in Figur 3 gezeigt, der Stromtransformator TR2 direkt an die Betriebsspannung UB1 vor den Transformator TR1 geschaltet wird, kann die Spannung zwischen den Wicklungen N1/N2,N3 verkleinert werden, wodurch ein kleinerer Spulenkörper verwendet werden kann und somit die Abmessungen des Transformators TR2 verkleinert werden können. In diesem Fall fließt nicht nur der Strom IBE, sondern auch der Strom durch die Rücklaufdiode DR durch den Transformator TR2, so daß auch während der Zeitspanne t4 bis t5 die Basisspannung auf negativen Potential gehalten wird.

Die angemeldete Schaltungsanordnung besitzt den Vorteil, daß der Basisstrom des Transistors T1 proportional zum Kollektorstrom ist und daß der Kollektorstrom den für den Transistor eigenen Abschaltstrom erzeugt. Es ist dadurch keine zusätzliche negative Spannungsquelle erforderlich, die dafür sorgt, daß die Basisspannung unterhalb von -2 Volt liegt. Es sind nur sehr wenige und billige Bauteile notwendig, die aus einem kostengünstigen, kleinen Transformator, vier Dioden und einem Schalttransistor kleiner Leistung zum Schalten des Basisstroms für den elektronischen Schalter bestehen.

## Patentansprüche

1. Schaltungsanordnung zur Ansteuerung eines Schalttransistors (T1), der in Serie zu einer Primärwicklung eines Transformators (TR1) liegt, an dessen Sekundärwicklungen stabilisierte Spannungen abnehmbar sind, mit einer ebenfalls in Serie zur Primärwicklung des Transformators (TR1) geschalteten Primärwicklung (N1) eines Stromstransformators (TR2) und einem Treibertransistor (T2), **dadurch gekennzeichnet**,
daß der Stromstransformator (TR2) eine angezapfte Sekundärwicklung (N2, N3) besitzt, wobei die Anzapfung der Sekundärwicklung mit dem Emitter des Schalttransistors (T1) verbunden ist,
daß das erste Ende der Sekundärwicklung (N2) über eine Diode (D1) mit dem Emitter eines Treibertransistors (T2) verbunden ist, dessen Kollektor mit der Basis des Schalttransistors (T1) verbunden ist,
und daß das zweite Ende der Sekundärwicklung (N3) über mindestens zwei Dioden (D2, D3) in Sperrichtung mit der Basis des Schalttransistors (T1) verbunden ist, dessen Basis außerdem über eine weitere Diode (D4) mit dem ersten Ende der Sekundärwicklung (N2) verbunden ist.

2. Schaltungsanordnung nach Anspruch 1, **dadurch gekennzeichnet**, daß das Übersetzungsverhältnis (N2/N3) der Sekundärwicklungen (N2, N3) sich nahezu wie vier zu eins verhält.

3. Schaltungsanordnung nach Anspruch 1 oder 2, **dadurch gekennzeichnet**, daß sie für ein Schaltnetzteil eines Bildwiedergabegerätes vorgesehen ist.

4. Schaltungsanordnung nach Anspruch 1 oder 2, **dadurch gekennzeichnet**, daß sie für eine Horizontalablenkschaltung eines Bildwiedergabegerätes vorgesehen ist.

5. Schaltungsanordnung nach Anspruch 1 oder 2, **dadurch gekennzeichnet**, daß sie für einen Hochspannungsgenerator eines Bildwiedergabegerätes vorgesehen ist.

## Claims

1. Circuit arrangement for controlling a switching transistor (T1) which is in series with a primary winding of a transformer (TR1), from the secondary windings of which, stabilised voltages can be derived, and including a driver transistor (T2) and a primary winding (N1) of a current transformer (TR2) which is likewise connected in series with the primary winding of the transformer (TR1), characterised in
that the current transistor (TR2) comprises a tapped secondary winding (N2, N3) wherein the tap of the secondary winding is connected to the emitter of the switching transistor (T1),
that the first end of the secondary winding (N2) is connected via a diode (D1) to the emitter of a driver transistor (T2) whose collector is connected to the base of the switching transistor (T1),
and that the second end of the secondary winding (N3) is connected via at least two diodes (D2, D3) connected in the blocking direction to the base of the switching transistor (T1) whose base is connected additionally to the first end of the secondary winding (N2) via a further diode (D4).

2. Circuit arrangement in accordance with Claim 1, characterised in that, the transformation ratio (N2/N3) of the secondary windings (N2, N3) is virtually four to one.

3. Circuit arrangement in accordance with Claim 1 or 2, characterised in that, it is provided for a switched-mode power supply of a picture reproduction apparatus.

4. Circuit arrangement in accordance with Claim 1 or 2, characterised in that, it is provided for a horizontal deflection circuit of a picture reproduction apparatus.

5. Circuit arrangement in accordance with Claim 1 or 2, characterised in that, it is provided for a high voltage generator of a picture reproduction apparatus.

## Revendications

1. Circuit de commande pour un transistor de commutation (T1) disposé en série par rapport à un enroulement primaire d'un transformateur (TR1) dont les enroulements secondaires fournissent des tensions stabilisées, comprenant un enroulement primaire (N1) d'un transformateur de courant (TR2) monté également en série avec l'enroulement primaire du transformateur (TR1) et un transistor d'attaque (T2), circuit **caractérisé en ce** que ledit transformateur de courant possède un enroulement secondaire à prises (N2, N3), sachant que la prise de l'enroulement secondaire est reliée à l'émetteur du transistor de commutation (T1), caractérisé également en ce que la première extrémité de l'enroulement secondaire (N2) est connectée, grâce à une diode (D1), à l'émetteur d'un transistor d'attaque (T2) dont le collecteur est relié à la base du transistor de commutation (T1), et caractérisé enfin en ce que, par l'intermédiaire de deux diodes (D2, D3) la seconde extrémité de l'enroulement secondaire (N3) est reliée, dans le sens de non-conduction, à la base du transistor de commutation (T1), dont la base est en outre connectée à la première extrémité de l'enroulement secondaire (N2) par l'intermédiaire d'une autre diode (D4).

2. Circuit selon la revendication 1 **caractérisé en ce** que le taux de transformation (N2/N3) des enroulements secondaires (N2, N3) est de l'ordre de un à quatre approximativement.

3. Circuit selon l'une quelconque des revendications 1 ou 2 **caractérisé en ce** qu'il est prévu pour le bloc d'alimentation à commutation d'un appareil de reproduction d'images.

4. Circuit selon l'une quelconque des revendications 1 ou 2 **caractérisé en ce** qu'il est prévu pour le circuit de balayage horizontal d'un appareil de reproduction d'images.

5. Circuit selon l'une quelconque des revendications 1 ou 2 **caractérisé en ce** qu'il est prévu pour une génératrice à haute tension d'un appareil de reproduction d'images.
